Europäisches Patentamt

European Patent Office

Office européen des brevets

(11) Veröffentlichungsnummer: **0 356 622**
**A2**

(12) **EUROPÄISCHE PATENTANMELDUNG**

(21) Anmeldenummer: 89109568.9

(51) Int. Cl.5· **G05B 19/39**

(22) Anmeldetag: 26.05.89

(30) Priorität: 30.08.88 DE 3829350

(43) Veröffentlichungstag der Anmeldung:
07.03.90 Patentblatt 90/10

(84) Benannte Vertragsstaaten:
**BE DE FR GB IT NL**

(71) Anmelder: **Messerschmitt-Bölkow-Blohm
Gesellschaft mit beschränkter Haftung
Robert-Koch-Strasse
D-8012 Ottobrunn(DE)**

(72) Erfinder: **Horneff, Peter
Bahnhofstrasse 62
D-6942 Mörtenbach(DE)**
Erfinder: **Treusch, Hans-Georg, Dr.
Steppenbergallee 94
D-5100 Aachen(DE)**
Erfinder: **Vayhinger, Kai-Uwe
Bachstrasse 23
D-7311 Hochdorf(DE)**
Erfinder: **Möller, Werner, Dr.
Ravensburgerstrasse 77
D-7900 Ulm(DE)**

(54) Verfahren und Einrichtung zur Positionierung von Lötlasern.

(57) Es wird ein Verfahren und eine Einrichtung zum Feinpositionieren von Lötlasern in mehreren Ausführungsbeispielen beschrieben, womit nicht nur eine Vereinfachung der Positionierung erzielt wird, sondern diese Positionierung wesentlich unterhalb der Serientoleranzen durchgeführt und angepaßt wird, ohne daß aufwendige und teure Einrichtungen hierfür erforderlich wären.

FIG. 4

## Verfahren und Einrichtung zur Positionierung von Lötlasern

Die Erfindung bezieht sich auf ein Verfahren und eine Einrichtung zur Durchführung dieses Verfahrens zur Positionierung von Lötlasern gemäß dem Oberbegriff des Anspruchs 1.

Durch die DE-OS 36 06 764 ist es bekannt, beim Laser-Mikrolöten die Lötstellen mittels Roboter-, XY-Tisch oder Scanner-Programm anzusteuern. Hierbei ist eine Positionsgenauigkeit von ± 50 μm üblich. Sollen nun Genauigkeiten von ± 5 μm erzielt werden, so ist dies nur mit großem Aufwand und mit langen Positionierzeiten möglich. Außerdem werden dann hohe Positioniergenauigkeiten bei den Lötgeometrien - also Lage, Form und Größe - vorausgesetzt und damit unrealistisch enge oder zumindest nur sehr aufwendig erreichbare Fertigungsstreuungen und Toleranzen erforderlich. Weiterhin sind beim Stand der Technik aufwendige Bildverarbeitungseinrichtungen notwendig.

Zwischenzeitlich zeigt es sich aber, daß das Laser-Mikrolöten nicht nur voll automatisiert sein soll, sondern daß auch sehr feine Lötkontakte im Zehntel-Millimeterbereich zu erzeugen sind, wie sie beispielsweise bei Chipträgern und Mikrobauelementen für die Oberflächemontage gefordert werden. So erfordern hochpolige Chipträger mit über 300 Anschlüssen sehr enge Lötabstände und kleinere Pads und damit eine sehr hohe Positioniergenauig keit. Hierzu aber sind bei den bisherigen Positioniereinrichtungen aufwendige, zeitraubende Nachjustierungen zur Feinabgleichung erforderlich.

Der Erfindung liegt die Aufgabe zugrunde, ein Verfahren und eine Einrichtung der eingangs genannten Art zu schaffen, womit sowohl eine Vereinfachung der Positionierung als auch deren Genauigkeit unterhalb der Serientoleranzen ermöglicht wird und eine exakte, individuelle Positionsanpassung innerhalb eines automatischen Funktionsablaufs schnell gewährleistet ist.

Diese Aufgabe wird durch das im Anspruch 1 aufgezeigte Verfahren und die im Anspruch 3 konzipierte Einrichtung gelöst. In den Unteransprüchen sind Ausgestaltungen und Weiterbildungen von Verfahren und Einrichtung aufgezeigt und in der nachfolgenden Beschreibung ist ein Ausführungsbeispiel erläutert sowie in den Figuren der Zeichnung skizziert. Es zeigen:

Fig. 1 ein Schemabild der Laser-Detektoranordnung,

Fig. 1a ein Schnitt durch eine Lötstelle eines Chipträgers,

Fig. 1b ein Diagramm des Detektorsignals an der Lötstelle gemäß Fig. 1a,

Fig. 2 ein Diagramm der Reflexionssignale einer engeren Stiftkontaktreihe in einer bestimmten Zeit,

Fig. 3a ein Schemabild einer Fotodiodenanordnung um die Optik des Lasers,

Fig. 3b ein Schemabild einer Fotodiodenanordnung und eines IR-Detektors um die Optik des Lasers,

Fig. 4 ein Blockschaltbild eines Ausführungsbeispiels einer Positioniereinrichtung.

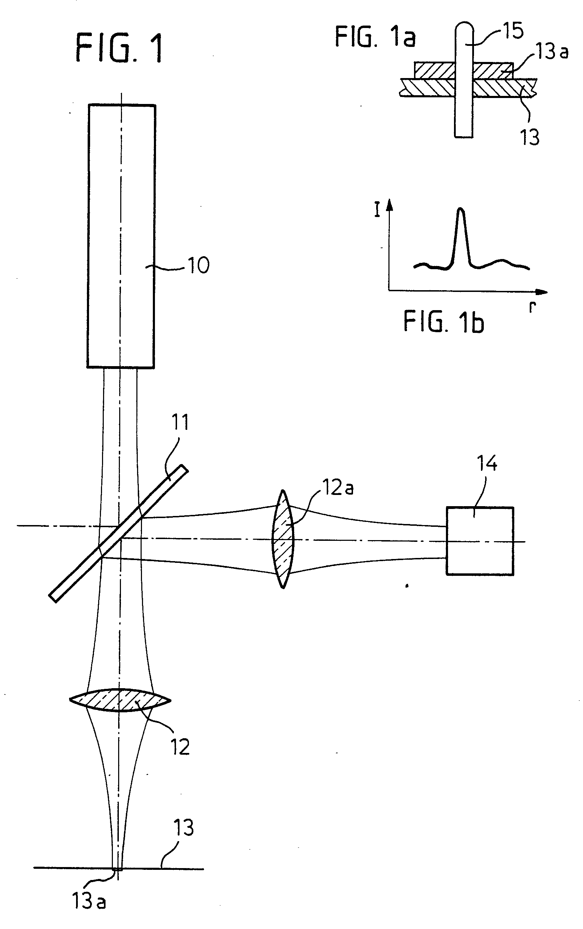

Die Methode für eine Positionierung, wie sie hier in einem Ausführungsbeispiel vorgeschlagen wird ist in der Fig. 1 skizziert. In den Strahlengang eines Lasers 10 ist ein Strahlteiler 11 angeordnet, der den einen hälftigen Strahlteil über eine Fokussieroptik 12 auf den zu lötenden Kontakt 13a auf dem Chipträger 13 richtet und den anderen hälftigen Strahlteil über die Fokussieroptik 12a auf einen Detektor 14, der exakt und eindeutig die reflektierenden Stiftkontakte, Schaltungs- und Bauelemente auf dem Chipträger registriert. Bei der Entwicklung des hier vorgeschlagenen Verfahrens wurde entdeckt, daß gewöhnliche, handelsübliche, bei 630 μm empfindliche Fotodioden, die neben oder im Strahlengang des Pilotlasers angeordnet sind, völlig einwandfrei und exakt die unbeschichteten, zumeist je doch vorverzinnten Kontaktstellen oder Anschlußstellen registrieren. Die von dem oder den Detektoren 14 - vorzugsweise die genannten Fotodioden 16 - erzeugten elektrischen Signale werden nun zur Einstellung der Positionierung benutzt, d. h. der Roboter, XY-Tisch und vorzugsweise der Scanner werden angehalten, der Lötlaser angeschaltet und der Lötvorgang initiiert. Erst wenn der Lötlaser ausgeschaltet ist, läuft das Positioniergerät weiter.

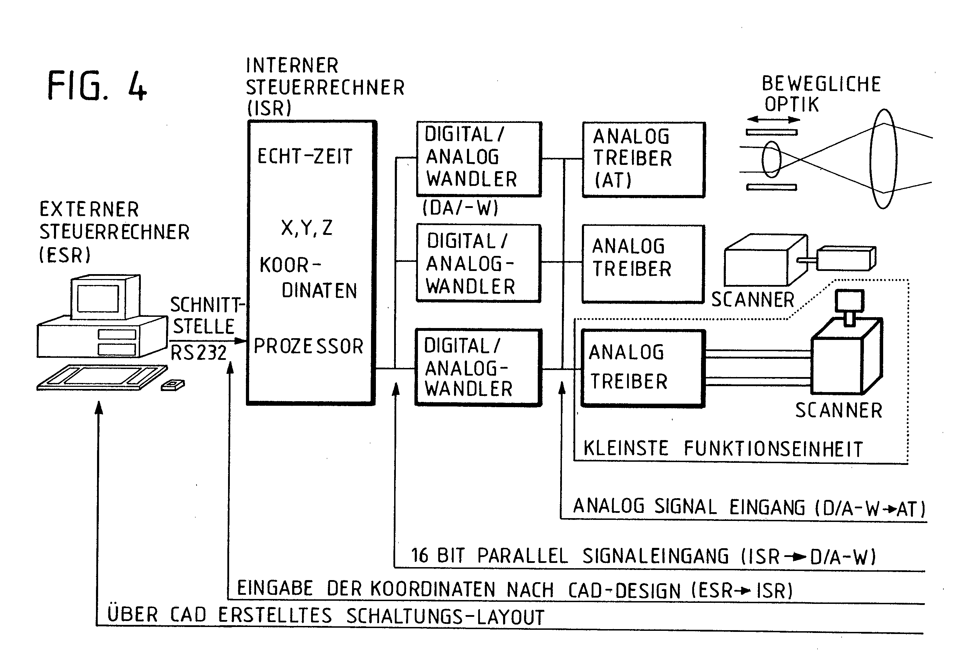

Es hat sich gezeigt, daß vorstehendes Verfahren sich besonders für eine schnellarbeitende Scann-Einrichtung - wie sie beispielsweise im Blockschaltbild gemäß Fig. 4 skizziert ist - eignet. Hier werden die einzelnen Positionen grob angesteuert und über einen analogen Abgleich des Reflexionssignals die jeweilige Feinpositionierung über die Scannerspiegel vorgenommen. Hier können nun erstmals aufwandlos Einstellzeiten von 1 bis 2 ms erreicht werden.

Prinzipiell kann bei dem Reflexionsverfahren ohne Ortskoordinaten gearbeitet und die gesamte Schaltung abgetastet werden. Hierfür eignet sich besonders das Laser-Scanning. Es hat sich gezeigt, daß die übliche Grobpositionierung beibehalten werden kann und nur die individuelle Feinanpassung im Zehntel- bis Tausendstell-Bereich durchzuführen ist.

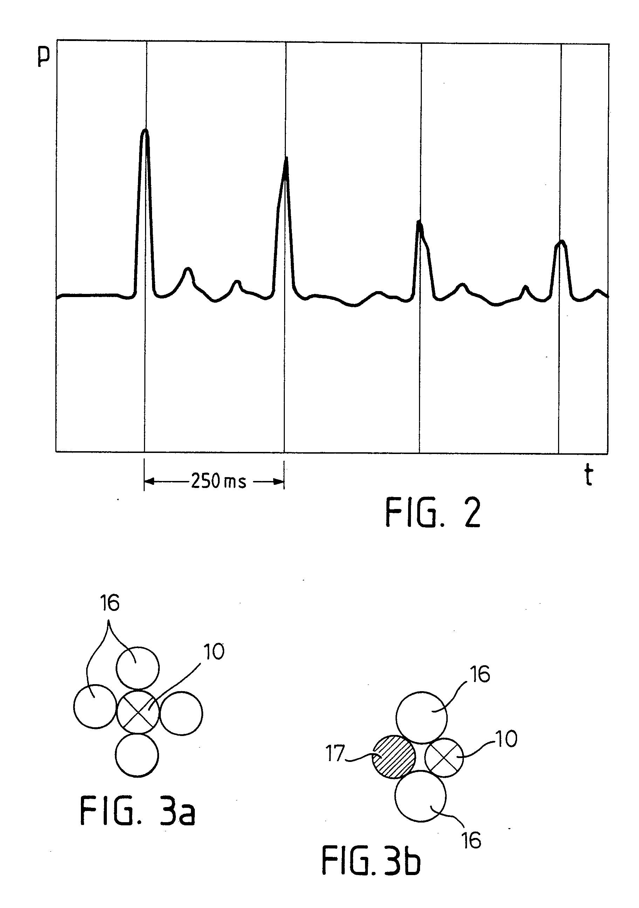

In einem Ausführungsbeispiel wird nun vorgeschlagen, wie in Fig. 3a skizziert, vier Fotodioden 16 kleeblattartig um die Optik des Lasers 10 anzuordnen und über eine Kompensationsschaltung - wie sie dem Fachmann geläufig ist - zu verbinden. Das Stopsignal für die Positionierung und das Startsignal für den Lötlaser wird erst nach Vollzug des Abgleichs ausgelöst.

In einem weiteren Ausführungsbeispiel. das in Fig. 3b schematisch dargestellt ist, wird dem Lötlaser zur Temperatursteuerung ein IR-Detektor zugeordnet, wie dies beispielsweise aus der zum Stand der Technik angezogenen Druckschrift schon vorgeschlagen ist. In Kombination mit den Fotodio den 16 kann durch die zusätzliche Einkopplung eines IR-Detektors 17 über IR-Lichtwellenleiter eine wesentliche Verbilligung der relativ aufwendigen Laserlötgeräte erzielt werden, wie nachstehende Ausführungen erläutern.

Das vorgeschlagene Verfahren erbringt optimale Ergebnisse insbesondere bei Serienlötungen von Chipträgern und Stiftreihen in einfacher geometrischer Anordnung. Nun ist es möglich, nach einer Positionierung mehrere Verlötungen gleichzeitig mit mehreren Lichtwellenleiterkabeln vorzunehmen. Hierzu sind diese Kabel über Strahlteiler dem einen Lötlaser 10 zugeordnet. Da nun der IR-Detektor 17 frequentiell mit einer sehr kurzen - Ansprechzeit im Bereich von 1ms - arbeitet, damit also erheblich unter der Laserlötzeit von größer als 50 ms liegt, können problemlos mehrere verschiedene Laserlötstellen über mehrere IR-Lichtwellenleiter überwacht und die verschiedenen Temperatur-/Zeitkurven auch von einem einzigen IR-Detektor 17 aufgenommen werden.

Damit ist nun ein Verfahren und eine Einrichtung zur Feinpositionierung von Lötlasern geschaffen, das mittels einer Positioniereinrichtung - vorzugsweise ein Scanner - das zu verlötende Substrat mit einem Laserstrahl abtastet und mit einem Lichtdetektor - Fotodiode - die reflektierte Lichtintensität verfolgt. An den metallisch glänzenden, meist vorverzinnten Lötstellen tritt ein starkes Reflexionssignal auf, das zum Feinpositionieren, Anhalten und Aufschalten des Lötlasers verwendet wird.

Das in Figur 4 gezeigte Blockschaltbild dürfte im Zusammenhang mit vorstehenden Ausführungen so deutlich und verständlich sein, daß weitere Ausführungen hierzu nicht mehr erforderlich erscheinen.

## Ansprüche

1. Verfahren zur Positionierung von Lötlasern, wobei die einzelnen Lötstellen mittels einem Roboter-, XY-Tisch- oder Scannerprogramm angesteuert werden, **dadurch gekennzeichnet,** daß das zu verlötende Substrat mit dem Laserstrahl - beispielsweise des Scanners - abgetastet und mit einem oder mehreren Lichtdetektoren die reflektierte Lichtintensität verfolgt und zur Einstellung der Positionierung verwendet wird, wobei der Roboter, XY-Tisch oder Scanner entsprechend angehalten, der Lötlaser angeschaltet, mittels einem IR-Detektor der Lötvorgang überwacht und der Lötlaser temperatur-/zeitgerecht ausgeschaltet und das Ausschaltsignal zum Start für die nächste Positionierstellung verwendet wird.

2. Verfahren nach Anspruch 1, **dadurch gekennzeichnet,** daß die Lötpositionen grob angesteuert werden und über einen analogen Abgleich des Reflexionssignals die Feinpositionierung über - beispielsweise - die Scannerspiegel durchgeführt wird.

3. Einrichtung zur Durchführung des Verfahren nach Anspruch 1 oder 2, **dadurch gekennzeichnet,** daß handelsübliche Photodioden bestimmter Empfindlichkeit neben oder im Strahlengang des Pilotlasers angeordnet und über eine Kompensationsschaltung miteinander verbunden sind und die Start/Stop-Signale für den Lötlaser von einer Abgleichseinrichtung der Kompensationsschaltung gegeben werden.

4. Einrichtung nach Anspruch 3, **dadurch gekennzeichnet,** daß dem Lötlaser und den Photodioden ein IR-Detektor zugeordnet ist, der mittels IR-Lichtwellenleiter einkoppelbar ist.

5. Einrichtung nach den Ansprüchen 3 oder 4, **dadurch gekennzeichnet,** daß mehrere Lichtwellenleiter angeordnet sind, die über Strahlteiler dem Lötlaser zugeordnet sind.

6. Einrichtung nach den Ansprüchen 3 bis 5, **dadurch gekennzeichnet,** daß mehrere IR-Lichtwellenleiter angeordnet sind, die mehrere Lötstellen gleichzeitig überwachen und die verschiedenen Temperatur/Zeit-Kurven einem einzigen IR-Detektor zugeführt werden.

FIG. 1

FIG. 1a

15

13a

13

I

r

FIG. 1b

10

11

12a

14

12

13

13a

10 550

FIG. 2

FIG. 3a

FIG. 3b

10 550

# FIG. 4

INTERNER
STEUERRECHNER
(ISR)

BEWEGLICHE
OPTIK

EXTERNER
STEUERRECHNER
(ESR)

ECHT-ZEIT

X, Y, Z

KOOR-
DINATEN

PROZESSOR

SCHNITT-
STELLE
RS232

DIGITAL/
ANALOG
WANDLER
(DA/-W)

ANALOG
TREIBER
(AT)

DIGITAL/
ANALOG-
WANDLER

ANALOG
TREIBER

SCANNER

DIGITAL/
ANALOG-
WANDLER

ANALOG
TREIBER

SCANNER

KLEINSTE FUNKTIONSEINHEIT

ANALOG SIGNAL EINGANG (D/A-W→AT)

16 BIT PARALLEL SIGNALEINGANG (ISR→D/A-W)

EINGABE DER KOORDINATEN NACH CAD-DESIGN (ESR→ISR)

ÜBER CAD ERSTELLTES SCHALTUNGS-LAYOUT

EP 0 356 622 A2